# EUROPEAN PATENT SPECIFICATION

(11) **EP 2 211 535 B1**
(45) Date of publication and mention of the grant of the patent: **28.08.2013**
(21) Application number: 09177697.1
(22) Date of filing: 02.12.2009
(51) Int. Cl.: H04N 5/225, F16M 11/12, F16M 11/18

(54) **Core mounting structure and camera device**
Kernmontagestruktur und Kameravorrichtung
Structure d'assemblage de noyau et dispositif de caméra

(30) Priority: 21.01.2009 CN 200910001961
(43) Date of publication of application: 28.07.2010
(73) Proprietor: Huawei Device Co., Ltd., Shenzhen, Guangdong 518129 (CN)
(72) Inventor: Zhao, Xiaoping, Shenzhen Guangdong 518129 (CN)
(74) Representative: Isarpatent

(56) References cited:
- US-A- 4 233 634
- US-A- 5 598 207
- US-A1- 2007 041 724

## Description

### FIELD OF THE INVENTION

The present invention relates to a mechanical technology field, and in particular, to a core mounting structure and a camera device equipped with the core mounting structure.

### BACKGROUND

With the rapid development of the photographic technology, people have increasingly high requirements for the definition of videos taken by a camera device.

A core, as an important part of the camera device, is set on a core mounting structure, and rotated in the core mounting structure. The higher the rotation precision of the core is, the higher the definition of videos taken by the camera device is.

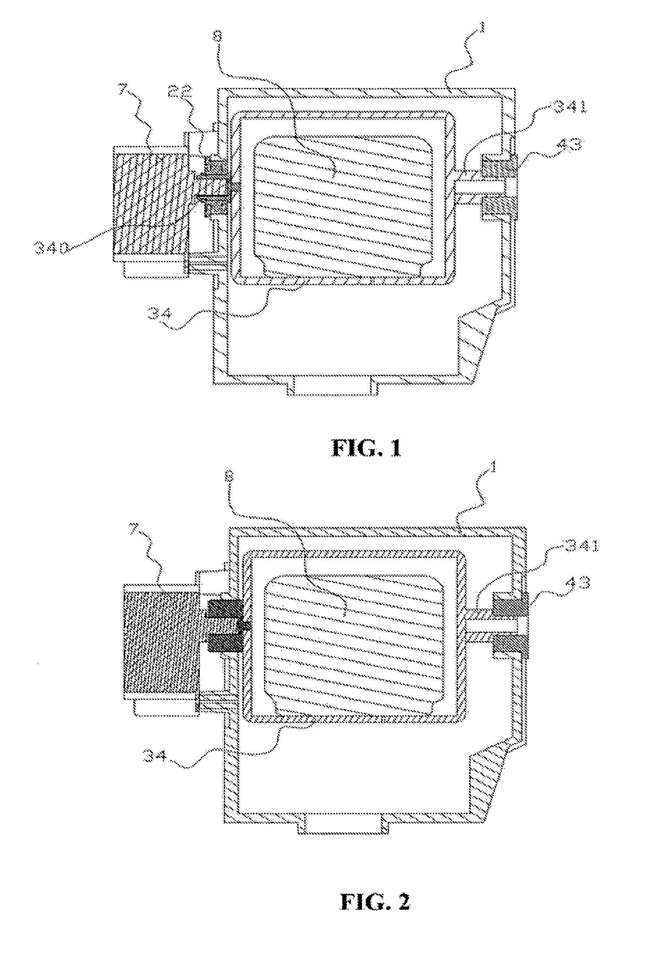

As shown in FIG. 1, the existing core mounting structure includes the U-shaped frame body 1. The frame body 1 includes sidewalls that are opposite to each other. The core mounting bracket 34 is available between these sidewalls. The U-shaped core mounting bracket 34 includes two sidewalls that are opposite to each other and the bottom surfaces that are perpendicular to both sidewalls. These sidewalls of the core mounting bracket 34 are pin-jointed to two sidewalls of the frame body 1 through the power shaft 340 and the rotation shaft 341. The frame body 1 is usually called an external U-shaped frame. The core mounting bracket 34 is usually called an internal U-shaped bracket. One end of the power shaft 340 is connected to the main shaft of the motor 7, and the other end is fixedly connected to a sidewall of the core mounting bracket 34. A through hole is available on the bottom surface of the core mounting bracket 34, so that the core 8 is fixedly connected on the bottom surface through the through hole.

When the main shaft of the motor 7 is rotated, the power shaft 340, core mounting bracket 34, and the core 8 are also rotated. The rotation precision of the core 8 can be ensured when the requirements for the coaxiality of the power shaft 340 and the rotation shaft 341 on the core mounting bracket 34 and the coaxiality of the through holes that are used to connect the power shaft 340 and the rotation shaft 341 to sidewalls of the frame body 1 in pin-jointed mode are high. To enhance the preceding requirements for the coaxiality to further guarantee the rotation precision of the core 8, the prior art provides three methods:

With the method as shown in FIG. 1, the bearing 22 is available between the power shaft 340 and the pin-jointed sidewall of the frame body 1 thereof, and the elastic plastic component 43 is available between the rotation shaft 341 and the sidewall of the frame body 1 where the rotation shaft 341 is pin-jointed.

With the method as shown in FIG. 2, a sidewall of the core mounting bracket 34 is fixedly connected to the main shaft of the motor 7 directly, the rotation shaft 341 is available on the other sidewall of the core mounting bracket 34, and the elastic plastic component 43 is available between the rotation shaft 341 and the pin-jointed sidewall of the frame body 1.

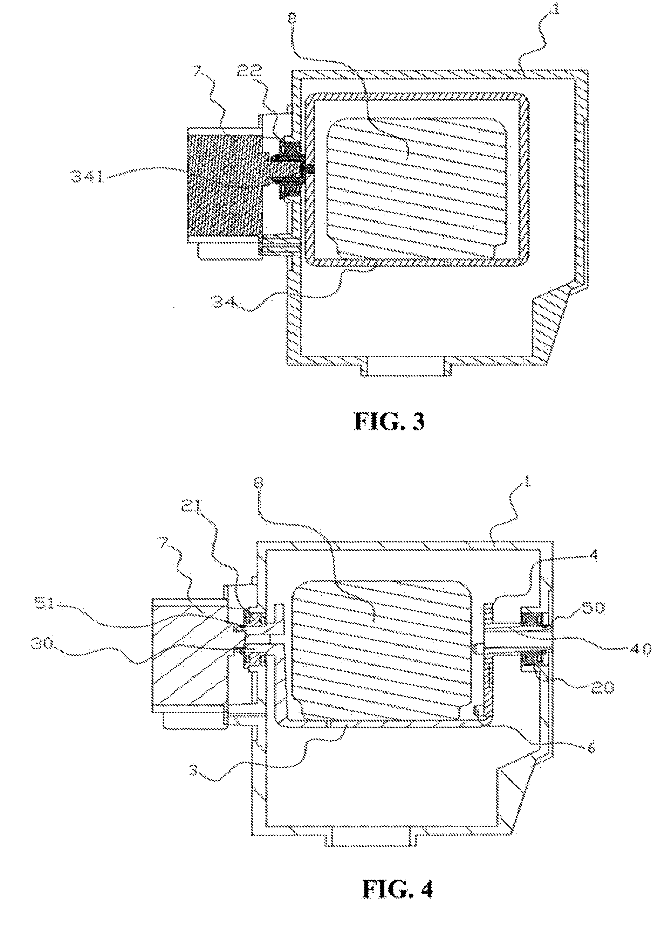

With the method shown in FIG. 3, a sidewall of the core mounting bracket 34 is connected to the main shaft of the motor 7 through the rotation shaft 341, and the other sidewall is in the air. The bearing 22 is available between the rotation shaft 341 and the pin-jointed sidewall of the frame body 1 to reduce the friction on the rotation shaft 341.

In the process of implementing the present invention, the inventor finds the following problems in the prior art although the rotation precision of the core is improved to a certain extent:
the elastic plastic component has the features of hard processing, high requirements for precision, low resistance, and easily worn-out feature. As a result, the cost is increased, the capability to maintain the rotation precision of the core is weak, and the service life of the core is short; and
when a sidewall of the core mounting bracket is in the air, the bearing that is available between the power shaft of the frame body and the sidewall of the frame body where the power shaft is pin-jointed is under unbalanced pressure, the power shaft and the bearing produces large internal stress, and can be easily worn out. The clearance between the worn-out power shaft and the bearing is large and the clearance between the bearing and a sidewall of the frame body is also large, and the bottom surface of the frame body and the core that is mounted on the bottom surface of the frame body are tilted relatively to the horizontal surface under the influence of gravity. In this case, the rotation precision of the core is reduced, and therefore the capability to maintain the rotation precision of the core is weak and the service life of the core is short.

US 2007/0041724 A1 discloses that a camera device includes a camera body including an optical system, two rotational shafts having both ends extending on both sides from the camera body, and a pair of holders which rotatably support both ends of the rotational shafts, respectively, and permit the camera body to rotate about the rotational shafts. At least one of the holders includes a cup-shaped bearing portion into which an end of the rotational shafts is inserted, a holder body, and a spring portion which extends from the holder body, supports the bearing portion at the extended end thereof, and urges the bearing portion toward the other holder side in the axial direction of the rotational shafts.

US 4233634 A discloses a video camera tilt and pan head includes a bifurcated support which is free to pivot about a vertical axis for the "pan" action of the video camera. A camera cradle receives the video camera and the cradle is provided with slots and a tie-down bolt such that the camera is adjustable horizontally with respect to the cradle. The cradle is supported on transverse mounting pivots secured in the support. The pivots clamp in vertical cradle slots, enabling the cradle to be adjustable vertically with respect to the pivots. The pivots may be tubular to act as sight tubes to locate the cradle and camera with respect to the desired pivot axes.

### SUMMARY

A core mounting structure is provided in the present invention to solve the technical problems covering the weak capability of the existing core mounting structure to maintain the rotation precision of the core, and short service life of the existing core mounting structure.

To achieve the preceding purposes, the following technical solution is adopted in an embodiment of the present invention:

A core mounting structure includes a frame body. The frame body includes sidewalls that are opposite to each other. A core mounting bracket is set between the sidewalls. The core mounting bracket is made up of a power bracket and a balancing bracket which are independent of each other. The power bracket is pin-jointed to one sidewall of the frame body through a power shaft and the balancing bracket parallel to the sidewalls is pin-jointed to the other sidewall of the frame body through a rotation shaft. The power bracket comprises a power board parallel to the sidewalls and a perpendicular mounting panel fixedly connected to each other and the power shaft is fixedly connected to the power board. A connecting part in plate form which is perpendicular to the mounting panel is set at one end of the mounting panel away from the power board. A connecting plate is set between the connecting part on the mounting panel and the balancing bracket, and the connecting part is assembled to the balancing bracket through the connecting plate.

A camera device is provided herein to solve technical problems, covering weak capability of the existing core mounting structure to maintain the rotation precision of the core, and short service life of the existing core mounting structure.

To achieve the preceding purposes, the following technical solution is provided in an embodiment of the present invention:

The camera device includes a core and a core mounting structure. The core mounting structure includes a frame body. The frame body includes sidewalls that are opposite to each other. A core mounting bracket is set between these sidewalls. The core is set on the core mounting bracket. The core mounting bracket is made up of a power bracket and a balancing bracket which are fixedly connected to each other. The power bracket is pin-jointed to one sidewall of the frame body through a power shaft. The balancing bracket is connected to the other sidewall of the frame body through a rotation shaft.

Compared with the prior art, the core is set on the core mounting bracket in embodiments of the present invention. The core mounting bracket includes a power bracket and a balancing bracket fixedly connected to each other. The power bracket and the balancing bracket are independent of each other, and the position of them can be adjusted during the assembly on the basis of the position of the through holes on sidewalls of the frame body for the pin-jointed connection of a power shaft and a rotation shaft. During the production, the requirement for the coaxiality is not mandatory, so the difficulty to process and produce the core mounting bracket is decreased, and the cost is reduced. In addition, because the power bracket is pin-jointed to one sidewall of the frame body through the power shaft that is fixedly connected to the power bracket, and the balancing bracket is pin-jointed to the other sidewall of the frame body through the rotation shaft, the power shaft and the rotation shaft bear stress evenly and are reliable, and the service life thereof is long, thus solving the technical problems covering weak capability of the existing core mounting structure to maintain the rotation precision of the core, and short service life of the existing core mounting structure.

### BRIEF DESCRIPTION OF THE DRAWINGS

FIG. 1 is a schematic diagram showing a core mounting structure fitted with a core in the prior art when the core mounting structure is connected to a motor;
FIG. 2 is a schematic diagram showing another core mounting structure fitted with a core in the prior art when the core mounting structure is connected to a motor;
FIG. 3 is a schematic diagram showing another core mounting structure fitted with a core in the prior art when the core mounting structure is connected to a motor;
FIG. 4 is a schematic diagram showing a core mounting structure fitted with a core in an embodiment of the present invention when the core mounting structure is connected to a motor;
FIG. 5 is a schematic diagram showing a perspective of the core mounting structure in FIG. 4;
FIG. 6 is a schematic diagram showing a perspective when a bearing is set on the frame body in the core mounting structure shown in FIG. 4 and FIG. 5;
FIG. 7 is a schematic diagram showing a perspective when a core mounting bracket is set on the frame body fitted with a bearing in the core mounting structure shown in FIG. 6;
FIG. 8 is a schematic diagram showing a perspective when a balancing bracket is set on the frame body fitted with a bearing and a core mounting bracket shown in FIG. 7;
FIG. 9 is a schematic diagram showing a perspective when a retaining ring is set on the frame body fitted with a bearing, a core mounting bracket, and a balancing bracket shown in FIG. 8;
FIG. 10 is a schematic diagram showing the perspective when a connecting plate is set between the core mounting bracket and the balancing bracket on the frame body which is fitted with a bearing, a core mounting bracket, a balancing bracket, and a retaining ring and the balancing bracket shown in FIG. 9;
FIG. 11 is a schematic diagram showing the perspective when a motor and a core are set on the frame body shown in FIG. 10;
FIG. 12 is a schematic diagram showing another core mounting structure in an embodiment of the present invention;
FIG. 13 is a schematic diagram showing a perspective of a core mounting bracket of the core mounting structure in an embodiment of the present invention;
FIG. 14 is a schematic diagram showing a perspective of a balancing bracket of the core mounting structure in an embodiment of the present invention; and
FIG. 15 is a schematic diagram showing another perspective of a balancing bracket of the core mounting structure in an embodiment of the present invention.

### DETAILED DESCRIPTION

Embodiments of the present invention are detailed below with reference to accompanying drawings.

A core mounting structure is provided in an embodiment of the present invention. The core mounting structure is easily processed with low cost, good reliability, and long service life.

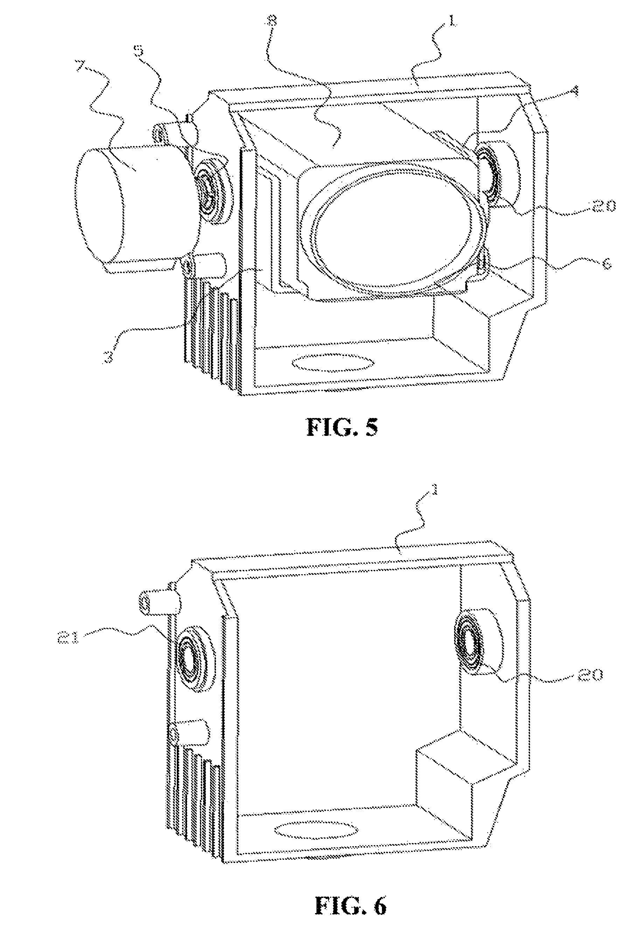

As shown in FIG. 4 and FIG. 5, the core mounting structure provided in an embodiment of the present invention includes a frame body 1. The frame body 1 includes the sidewalls that are opposite to each other. A core mounting bracket is set between sidewalls, and is made up of the power bracket 3 and the balancing bracket 4 which are fixedly connected to each other. The power bracket 3 is pin-jointed to one sidewall through the power shaft 30 that is fixedly connected to the power bracket 3. The balancing bracket 4 is pin-jointed to the other sidewall through the rotation shaft 40.

The core 8 in the embodiment of the present invention is set on a core mounting bracket. The core mounting bracket is made up of the power bracket 3 and the balancing bracket 4 which are fixedly connected to each other. The power bracket 3 and the balancing bracket 4 are independent of each other, and the position of the power bracket 3 and the balancing bracket 4 can be adjusted during the assembly on the basis of the position of the through holes on sidewalls of the frame body 1 for the pin-jointed connection of the power shaft 30 and the rotation shaft 40. During the production, the requirement for the coaxiality is not mandatory, so the difficulty to process and produce the core mounting bracket is lowered, and the cost is reduced. In addition, because the power bracket 3 is pin-jointed to one sidewall of the frame body 1 through the power shaft 30 that is fixedly connected to the power bracket 3, and the balancing bracket 4 is pin-jointed to the other sidewall of the frame body 1 through the rotation shaft 40, the power shaft 30 and the rotation shaft 40 bear stress evenly and are reliable, and the service life thereof is long, thus solving the technical problems covering the high cost, weak capability to maintain the rotation precision of the core, and short service life of the existing core mounting structure.

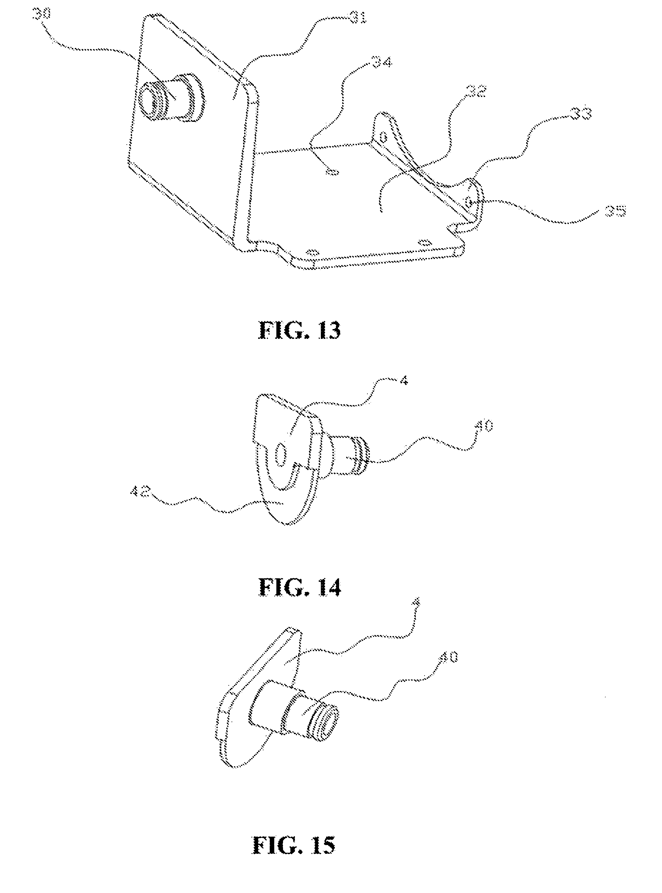

As shown in FIG. 4 and FIG. 13, the power bracket 3 includes a power board 31 and a mounting panel 32, which are perpendicular to each other and fixedly connected. The balancing bracket 4 is fixedly connected to the mounting panel 32. Because the power shaft 30 is connected to a power unit, the power unit drives the power board 31, the mounting panel 32, and the core 8 that is set on the mounting panel 32 through the power shaft 30. Several through holes 34, which are used to set the core 9, are opened on the mounting panel 32.

The power unit in the embodiment may be a motor 7 shown in FIG. 4. The power shaft 30 is connected to the main shaft of the motor 7. Because the opposite sidewalls of the frame body 1 are perpendicular to the horizontal surface, when the power board 31 is perpendicular to the mounting panel 32, the mounting panel 32 is parallel to the horizontal surface, and the power board 31 is parallel to a sidewall of the frame body 1 where the power shaft 30 is pin-jointed. If the sidewall of the frame body 1 where the power shaft 30 is pin-jointed is tilted at the angle of degrees towards the horizontal surface, the power board 31 and the mounting panel 32 can be tilted at the same angle of degrees to ensure that the mounting panel 32 is parallel to the horizontal surface. The design is adopted to fully use the space between the opposite sidewalls of the frame body 1, so that the structure in an embodiment of the present invention is compact.

As shown in FIG. 13, an integral structure is formed by the mounting panel 32, the power board 31, and the power shaft 30 in the embodiment. The conjunction of the mounting panel 32, the power board 31, and the power shaft 30 is in high strength, and can be molded in a set of moulds. Of course, the mounting panel 32 and the power board 31 can be independent structures and integrated into the integral structure.

As shown in FIG. 13, the connecting part 33 in plate form that is perpendicular to the mounting panel 32 is set at one end of the mounting panel 32 away from the power board 31. The connecting part 33 is connected to the balancing bracket 4 shown in FIG. 4, and located at one end of the mounting panel 32 away from the power board 31, so that the connecting part 33 is assembled easily with the balancing bracket 4.

Similar to the design principles of the power board 31 and the mounting panel 32 shown in FIG. 13, the balancing bracket 4 in the embodiment is in plate form, and the rotation shaft 40 is perpendicular to and fixedly connected to the balancing bracket 4, as shown in FIG. 14 and FIG. 15.

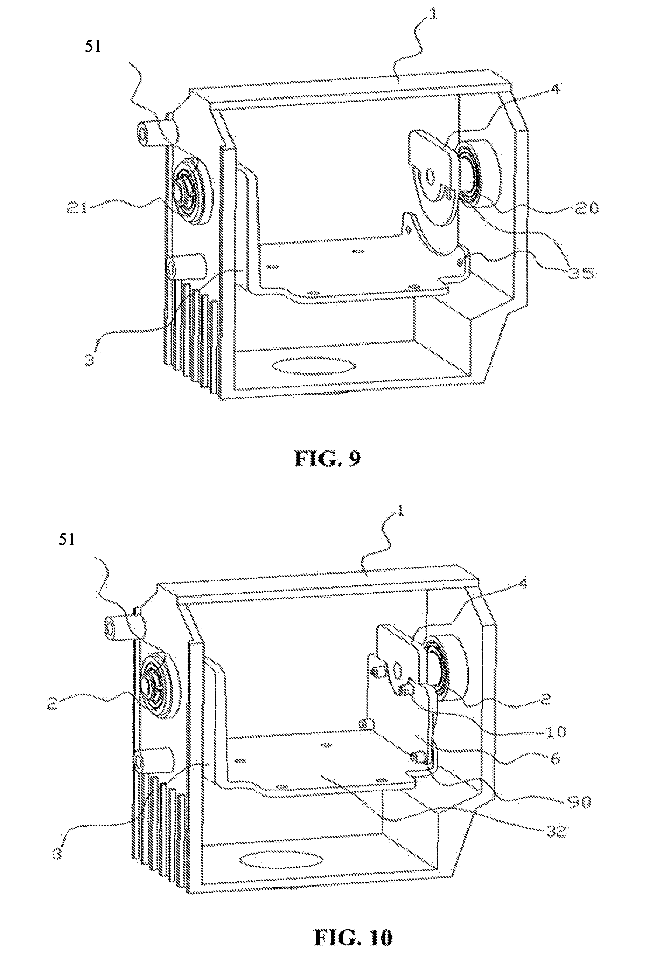

The connecting part 33 on the mounting panel 32 shown in FIG. 13 is connected to the balancing bracket 4 through the connecting part 6 shown in FIG. 10.
The height of the mounting panel 32 can be adjusted by changing the position where the connecting plate 6 is connected to the mounting panel 32 and/or the position where the connecting plate 6 is connected to the balancing bracket 4, thus ensuring that the mounting panel 32 is parallel to the horizontal surface.

At least one through connection hole 90 is opened at the edge of the connecting plate 6 shown in FIG. 10. At least one through mounting hole 35 that is corresponding to the through connection hole 90 is opened on the balancing bracket 4 and the connecting part 33 of the mounting panel 32 shown in FIG. 13. The balancing bracket 4 and the mounting panel 32 are fixedly connected on the connecting plate 6 by inserting the screw 10 or a bolt to the through connection hole 90 and the through connection hole 35. The screw 10 or the bolt is cheap and can be easily inserted, removed, or replaced.

In the embodiment, a depressed part 42 shown in FIG. 14 that is suitable to the connecting plate 6 is set on the balancing bracket 4. The through mounting hole 35 shown in FIG. 9 is opened on the depressed part 42. The connecting plate 6 is embedded on the depressed part 42 of the balancing bracket 4. This design leads to a more compact and aesthetic structure of the connecting plate 6, the balancing bracket 4, and the connecting part 33.

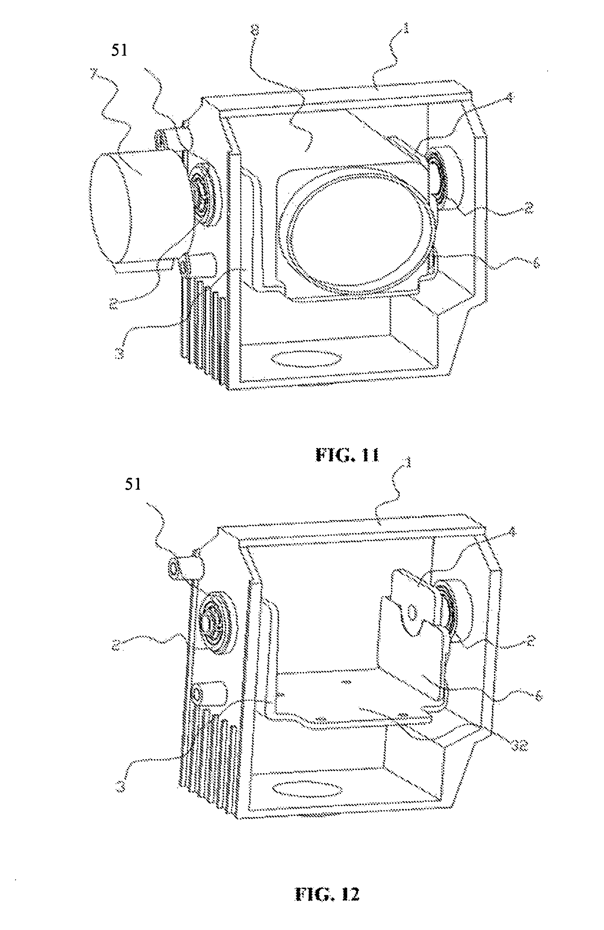

As shown in FIG. 12, the balancing bracket 4 and the mounting panel 32 can be fixedly connected to the connecting plate 6 in one or more modes including rivet connection, soldering, hot-melt connection, and glue joint. When the balancing bracket 4, the mounting panel 32 and the connecting plate 6 are metal materials, rivet and soldering connection modes can be used for fastened connection. In the case that the balancing bracket 4, the mounting panel 32, and the connecting plate 6 are plastic materials, the hot-melt or glue joint connection mode is applicable. The rivet connection mode or other metal parts, however, can be used for the soldering fixed connection. Of course, the balancing bracket 4 and the mounting panel 32 can also be fixedly connected to the connecting plate 6 in other modes such as bundle mode and tight fit mode.

As shown in FIG. 4, a bearing 21 is set between the power shaft 30 and the pin-jointed sidewall, and/or a bearing 20 is set between the rotation shaft 40 and the sidewall where the rotation shaft 40 is pin-jointed. The bearing 21 and the bearing 20 can further reduce the friction between the power shaft 30 and the pin-jointed sidewall, and the friction between the rotation shaft 40 and the pin-jointed sidewall, thus improving the rotation precision of the power shaft 30 and the rotation shaft 40 and prolongs their service lives.

In the embodiment, a retaining ring 51 is set between one end of the power shaft 30 and the bearing 21 to avoid the bearing 21 from being separated from the outside end of the power shaft 30. A retaining ring 51 is set between one end of the rotation shaft 40 and the bearing 20 to avoid the bearing 20 from being separated from the outside end of the rotation shaft 40.

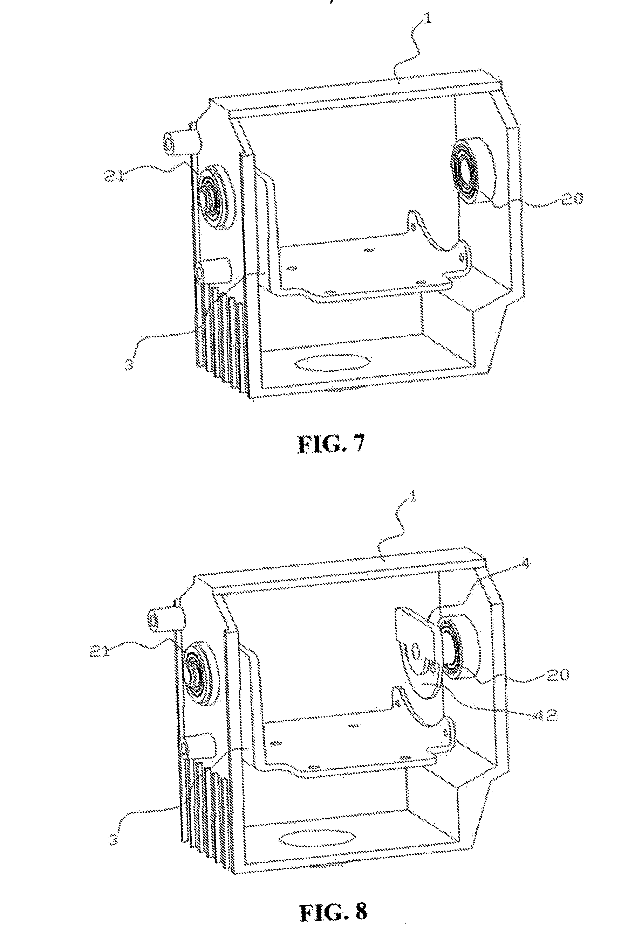

The method for assembling the preceding core mounting structure in an embodiment of the present invention includes the following steps:
Step 1: As shown in FIG. 4 and FIG. 6, the bearing 20 and the bearing 21 are respectively installed to two sidewalls of the frame body 1;
Step 2: As shown in FIG. 4 and FIG. 7, the power bracket 3 and the power shaft 30 are pin-jointed to the bearing 21 of the frame body 1;
Step 3: As shown in FIG. 4 and FIG. 8, the balancing bracket 4 and the rotation shaft 40 are pin-jointed to the bearing 20 of the frame body 1;
Step 4: As shown in FIG. 4 and FIG. 9, the retaining ring is mounted between the end of the power shaft 30 and the bearing 21, and the retaining ring 50 is mounted between the end of the rotation shaft 40 and the bearing 20;
Step 5: As shown in FIG. 10 and FIG. 13, the connecting part 33 on the mounting panel 32 is connected to the balancing bracket 4 by inserting the screw 10 into the connecting plate 6; and
Step 6: As shown in FIG. 4 and FIG. 11, the motor 7 is mounted on the frame body 1, and the core 8 is assembled onto the mounting panel 32.

A camera device which has a core mounting structure is provided in an embodiment of the present invention with the low cost and reliable core rotation precision.

As shown in FIG. 4 and FIG. 5, the camera device provided in an embodiment of the present invention includes the core 8 and the core mounting structure provided in embodiments of the present invention. The core 8 is set on the core mounting bracket.

Similar to the preceding embodiment of the present invention, the core mounting structure provided in the embodiment of the present invention features easy processing, low cost, good reliability, and long service life. Therefore, the cost of the camera device provided in the embodiment of the present invention is lowered correspondingly, and the rotation precision of the core 8 shown in FIG. 4 is reliable.

In the embodiment, the camera device is a camera, and a high-definition camera is preferred. Of course, the core mounting structure provided in the preceding embodiment of the present invention can be used to set the core 8 shown in FIG. 5 or parts similar to the core 8 on other photographic devices or electrical devices.

The foregoing sections describe the specific implementation of the present invention. However, all the modifications or replacements made by those skilled in the art in the technical range disclosed by the present invention are protected by the present invention. Therefore, the protection scope of the present invention is subject to the protection scope in claims.

## Claims

1. A core mounting structure, comprising:
a frame body (1) comprising sidewalls that are opposite to each other; and
a core mounting bracket set between the sidewalls and made up of a power bracket (3) and a balancing bracket (4) which are independent of each other,
wherein the power bracket (3) is pin-jointed to one sidewall of the frame body through a power shaft (30) and the balancing bracket (4) parallel to the sidewalls is pin-jointed to the other sidewall of the frame body (1) through a rotation shaft (40), and
the power bracket (3) comprises a power board (31) parallel to the sidewalls and a perpendicular mounting panel (32) fixedly connected to each other and the power shaft (30) is fixedly connected to the power board (31),
a connecting part (33) in plate form which is perpendicular to the mounting panel (32) is set at one end of the mounting panel (32) away from the power board (31),
a connecting plate (6) is set between the connecting part (33) on the mounting panel (32) and the balancing bracket (4), and the connecting part (33) is assembled to the balancing bracket (4) through the connecting plate (6).

2. The core mounting structure according to claim 1, wherein the balancing bracket (4) is in plate form, and the rotation shaft (40) is fixedly connected to the balancing bracket (4).

3. The core mounting structure according to claim 1, wherein a depressed part (42) that suits the connecting plate (6) is set on the balancing bracket (4), and the connecting plate (6) is embedded in the depressed part (42).

4. The core mounting structure according to claim 1, wherein the balancing bracket (4) and the mounting panel (32) are assembled to the connecting plate (6) in one or more modes of screw connection, bolt connection, rivet connection, soldering, hot-melt connection, and glue joint.

5. The core mounting structure according to any one of claims 1 to 4, wherein a bearing (21) is set between the power shaft (30) and a pin-jointed sidewall, and/or a bearing (20) is between the rotation shaft (40) and a pin-jointed sidewall.

6. A camera device, comprising a core (8) and the core mounting structure according to any one of claims 1 to 5, wherein
the core (8) is set on the core mounting bracket.

7. The camera device according to claim 6, wherein the camera device is a camera.

## Patentansprüche

1. Kernmontagestruktur mit
einem Rahmenkörper (1) mit Seitenwänden, die einander gegenüberliegen, und einer Kernmontagehalterung, die zwischen den Seitenwänden platziert ist und aus einer Krafthalterung (3) und einer Ausgleichshalterung (4) besteht, die voneinander unabhängig sind,
wobei die Krafthalterung (3) durch eine Kraftwelle (30) gelenkig mit einer Seitenwand des Rahmenkörpers verbunden ist und die parallel zu den Seitenwänden verlaufende Ausgleichshalterung (4) durch eine Drehwelle (40) gelenkig mit der anderen Seitenwand des Rahmenkörpers (1) verbunden ist, und
die Krafthalterung (3) eine parallel zu den Seitenwänden verlaufende Kraftplatte (31) und eine senkrechte Montageplatte (32) umfasst, die fest miteinander verbunden sind, und die Kraftwelle (30) fest mit der Kraftplatte (31) verbunden ist,
wobei ein Verbindungsteil (33) in Plattenform, der senkrecht zu der Montageplatte (32) verläuft, an einem Ende der Montageplatte (32) von der Kraftplatte (31) weg platziert ist, und
eine Verbindungsplatte (6) zwischen dem Verbindungsteil (33) an der Montageplatte (32) und der Ausgleichshalterung (4) platziert ist und der Verbindungsteil (33) durch die Verbindungsplatte (6) an der Ausgleichshalterung (4) montiert ist.

2. Kernmontagestruktur nach Anspruch 1, wobei die Ausgleichshalterung (4) in Plattenform ist und die Drehwelle (40) fest mit der Ausgleichshalterung (4) verbunden ist.

3. Kernmontagestruktur nach Anspruch 1, wobei ein niedergedrückter Teil (42), der mit der Verbindungsplatte (6) zusammenpasst, auf der Ausgleichshalterung (4) platziert ist und die Verbindungsplatte (6) im niedergedrückten Teil (42) eingebettet ist.

4. Kernmontagestruktur nach Anspruch 1, wobei die Ausgleichshalterung (4) und die Montageplatte (32) auf eine oder mehrere der folgenden Arten an der Verbindungsplatte (6) montiert sind: Schraubenverbindung, Bolzenverbindung, Nietverbindung, Lötung, Heißschmelzverbindung und Verklebung.

5. Kernmontagestruktur nach einem der Ansprüche 1 bis 4, wobei ein Lager (21) zwischen der Kraftwelle (30) und einer gelenkig verbundenen Seitenwand platziert ist und/oder ein Lager (20) zwischen der Drehwelle (40) und einer gelenkig verbundenen Seitenwand liegt.

6. Kameravorrichtung mit einem Kern (8) und der Kernmontagestruktur nach einem der Ansprüche 1 bis 5, wobei
der Kern (8) auf der Kernmontagehalterung platziert ist.

7. Kameravorrichtung nach Anspruch 6, wobei die Kameravorrichtung eine Kamera ist.

## Revendications

1. Structure d'assemblage de noyau, comprenant :
un corps formant cadre (1) comprenant des parois latérales opposées l'une à l'autre ;
et
une console d'assemblage de noyau disposée entre les parois latérales et constituée d'une console de puissance (3) et d'une console d'équilibrage (4) indépendantes l'une de l'autre,
la console de puissance (3) étant reliée par des broches à une paroi latérale du corps formant cadre par le biais d'un arbre de puissance (30) et la console d'équilibrage (4) parallèle aux parois latérales étant reliée par des broches à l'autre paroi latérale du corps formant cadre (1) par le biais d'un arbre de rotation (40), et
la console de puissance (3) comprenant une carte de puissance (31) parallèle aux parois latérales et un panneau d'assemblage perpendiculaire (32) reliés fixement l'un à l'autre et l'arbre de puissance (30) étant relié fixement à la carte de puissance (31),
une partie de connexion (33) sous forme de plaque qui est perpendiculaire au panneau d'assemblage (32) étant disposée à une extrémité du panneau d'assemblage (32) à l'écart de la carte de puissance (31),
une plaque de connexion (6) étant disposée entre la partie de connexion (33) sur le panneau d'assemblage (32) et la console d'équilibrage (4), et la partie de connexion (33) étant assemblée à la console d'équilibrage (4) par le biais de la plaque de connexion (6).

2. Structure d'assemblage de noyau selon la revendication 1, dans laquelle la console d'équilibrage (4) est sous forme de plaque, et l'arbre de rotation (40) est relié fixement à la console d'équilibrage (4).

3. Structure d'assemblage de noyau selon la revendication 1, dans laquelle une partie enfoncée (42) qui s'adapte à la plaque de connexion (6) est disposée sur la console d'équilibrage (4), et la plaque de connexion (6) est encastrée dans la partie enfoncée (42).

4. Structure d'assemblage de noyau selon la revendication 1, dans laquelle la console d'équilibrage (4) et le panneau d'assemblage (32) sont assemblés à la plaque de connexion (6) suivant un ou plusieurs modes de connexion par vissage, de connexion par boulonnage, de connexion par rivetage, par brasage, par thermofusion et par collage.

5. Structure d'assemblage de noyau selon l'une quelconque des revendications 1 à 4, dans laquelle un palier (21) est disposé entre l'arbre de puissance (30) et une paroi latérale reliée par des broches, et/ou un palier (20) est disposé entre l'arbre de rotation (40) et une paroi latérale reliée par des broches.

6. Dispositif de caméra, comprenant un noyau (8) et la structure d'assemblage de noyau selon l'une quelconque des revendications 1 à 5, dans lequel
le noyau (8) est disposé sur la console d'assemblage de noyau.

7. Dispositif de caméra selon la revendication 6, dans lequel le dispositif de caméra est une caméra.
